(19) Europäisches Patentamt
European Patent Office
Office européen des brevets

(11) **EP 2 067 932 A2**

(12) **EUROPEAN PATENT APPLICATION**

(43) Date of publication:
**10.06.2009 Bulletin 2009/24**

(51) Int Cl.:
**F01D 17/10** (2006.01)  **F02C 9/20** (2006.01)
**F02C 9/26** (2006.01)

(21) Application number: **08170799.4**

(22) Date of filing: **05.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.12.2007  IT MI20072301**

(71) Applicant: **ANSALDO ENERGIA S.P.A.**
**16152 Genova (IT)**

(72) Inventors:
 • **Lombardi, Filippo**
  **16026 Montoggio (IT)**

 • **Torre, Ivo**
  **16135 Genova (IT)**
 • **Pisano, Alessandro**
  **Cagliari 09128 (IT)**
 • **Bartolini, Giorgio**
  **09012 Capoterra (IT)**

(74) Representative: **Jorio, Paolo et al**
 **Studio Torta S.r.l.**
 **Via Viotti 9**
 **10121 Torino (IT)**

(54) **Regulating device for a hydraulic actuator for a regulating member of a turbine**

(57)    A regulating device for a hydraulic actuator includes: an estimating module (20) for determining an estimation ($\hat{E}_{Y1}^{(1)}$) of at least one derivative ($E_{Y1}^{(1)}$, ..., $E_{Y1}^{(K)}$, ..., $E_{Y1}^{(R)}$) of an error signal ($E_{Y1}$), defined by the difference between a reference position signal ($Y_{REF1}$, $Y_{REF2}$) and an effective position signal ($Y_{M1}$, $Y_{M2}$) indicative of an effective position ($Y_1$, $Y_2$) of a hydraulic actuator (10, 11) for a regulating member (7, 8) of a turbine (5); a computation module for determining a sliding surface ($\sigma$) on the basis of the estimation ($\hat{E}_{Y1}^{(1)}$); and a control module (22) of the sliding mode type, couplable to the hydraulic actuator (10, 11) for controlling the effective position ($Y$) of the hydraulic actuator (10, 11) on the basis of the sliding surface ($\sigma$). The control module (22) is of the higher order sliding mode type, the sliding surface ($\sigma$) includes a term proportional to the integral of the error signal ($E_{Y1}$) and the estimating module (20) comprises a differentiator of the Arbitrary Order Sliding Mode Differentiator type.

Fig. 2

**Description**

The present invention relates to a regulating device for a hydraulic actuator for a regulating member of a turbine and to a method for regulating a hydraulic actuator of a turbine.

As is known, gas and steam turbines are provided with valves and other regulating members that must be driven in a controlled manner to maintain preset running conditions. The driving of the valves and regulating members may be achieved through various types of actuators. However, when higher power and speed are required and precision is a critical factor as well, hydraulic actuators are generally preferred. In gas turbines, for instance, hydraulic actuators are used to drive the fuel feeding valves, the water-fuel emulsion valves and, more recently, also for the orientable vanes of the compressor inlet stage, which are normally designated as Inlet Guide Vanes (IGV). In steam turbines, the steam feeding valves use hydraulic actuators.

The hydraulic actuators may be single-stage or dual stage actuators.

A single stage actuator comprises a distributing valve for a control fluid and a hydraulic cylinder, coupled to the distributing valve and housing a plunger. The plunger is connected to a movable member of the regulating valve and its motion is determined by the configuration of the distributing valve, which is in turn controlled by an electromagnet.

In a dual-stage actuator there are two distributing valves and two hydraulic cylinders which are cascade connected. A first distributing valve is driven by an electromagnet and is coupled to a first hydraulic cylinder. The plunger of the first hydraulic cylinder drives the second distributing valve, to which it is rigidly connected. The second distributing valve is coupled to the second hydraulic cylinder, the plunger of which is connected to a movable member of the regulating valve. The first stage and the second stage are sometimes defined respectively as "electroconverter" (or "electrohydraulic converter") and "servomotor".

As far as control is concerned, the use of electrohydraulic actuators however gives rise to some problems related, on one side, to the complexity of the system and, on the other side, to the parametric and functional uncertainty that inevitably affects modelling.

Firstly, a regulator operating on electrohydraulic actuators, in particular in gas or steam turbines, must satisfy strict requirements as regards precision, responsiveness and damping coefficient. Furthermore, especially when conventional regulators of the PI or PID type are used, complex calibration of parameters must be carried out. Besides requiring a lot of time, the calibration operations do not allow to provide the regulator with robustness, it remaining sensitive to the inevitable variations in the parameters. Therefore, even modest variations of the parameters may considerably affect the performance of the turbine-regulator system up to risking its stability.

More recently, the use has been suggested of nonlinear "sliding mode" regulators for the control of regulating valves actuators, both in gas turbines and in steam turbines. The solutions indentified up until now have allowed to improve the robustness of the system with respect to the variation of the parameters, but still require elaborate identification procedures to determine the relative degree of the controlled system. An estimation error may have severe consequences, as the order of the regulator is determined on the basis of the relative degree.

It is therefore an object of the present invention to provide a regulating device for a hydraulic actuator for a regulating member of a turbine and a method for regulating a hydraulic actuator of a turbine allowing to overcome the aforementioned drawbacks.

According to the present invention there are provided a regulating device for a hydraulic actuator for a regulating member of a turbine and a method for regulating a hydraulic actuator of a turbine respectively according to claims 1 and 13.

The present invention will now be described with reference to the accompanying drawings, which illustrate some non-limitative embodiments thereof, in which:

- Figure 1 is a block diagram of a gas turbine system including a regulating device according to a first embodiment of the present invention;
- Figure 2 is a more detailed block diagram of the regulating device of Figure 1, coupled with an actuator of the system of Figure 1;
- Figure 3 is a more detailed block diagram of an element of the regulating device shown in Figure 2;
- Figure 4 is a more detailed block diagram of another portion of the regulating device of Figure 1, coupled with another actuator of the system of Figure 1; and
- Figure 5 is a block diagram showing a portion of the regulating device according to the invention coupled to an actuator of a different gas turbine system;
- Figure 6 is a block diagram of an element of a regulating device according to a second embodiment of the present invention; and
- Figure 7 is a block diagram of an element of a regulating device according to a third embodiment of the present invention.

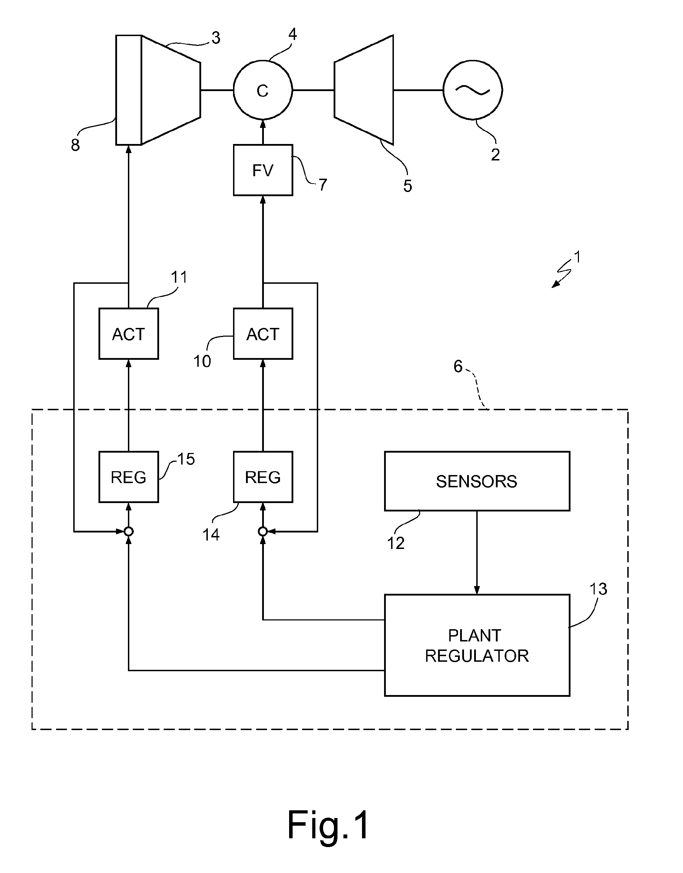

Figure 1 diagrammatically shows a gas turbine plant 1, in this case a plant for the production of electric energy.

Plant 1 is selectively connectable to a distribution network through a main switch (not shown) and comprises a generator 2, a compressor 3, a combustion chamber 4, a turbine 5 and a control device 6.

Combustion chamber 4 receives a controlled fuel flow rate through a feeding valve 7 of a known type. An inlet stage or IGV stage 8 of compressor 3 is provided with a plurality of orientable vanes or IGVs (Inlet Guide Vanes, not shown), the inclination of which may be modified to regulate the air flow rate sucked by compressor 3 itself. Feeding valve 7 and IGV stage 8 of compressor 3 are driven by respective hydraulic actuators 10, 11.

Generator 2, in this case a synchronous alternator, is mechanically connected on the same axis as turbine 5 and compressor 3, in order to be rotated at the same angular speed. Generator 2 converts the mechanical power provided by turbine 5 into active electric power and makes it available for the distribution network.

A plurality of quantities M relative to turbine 5 is detected by control device 6 through a plurality of known sensors 12. The detected quantities comprise, for instance, the angular speed, the active electric power supplied and a temperature of the exhaust gases of turbine 5.

In detail, in addition to sensors 12, control device 6 also comprises a plant regulator 13, a first actuating regulator 14, coupled to hydraulic actuator 10 of feeding valve 7, and a second actuating regulator 15, coupled to hydraulic actuator 11 of IGV stage 8.

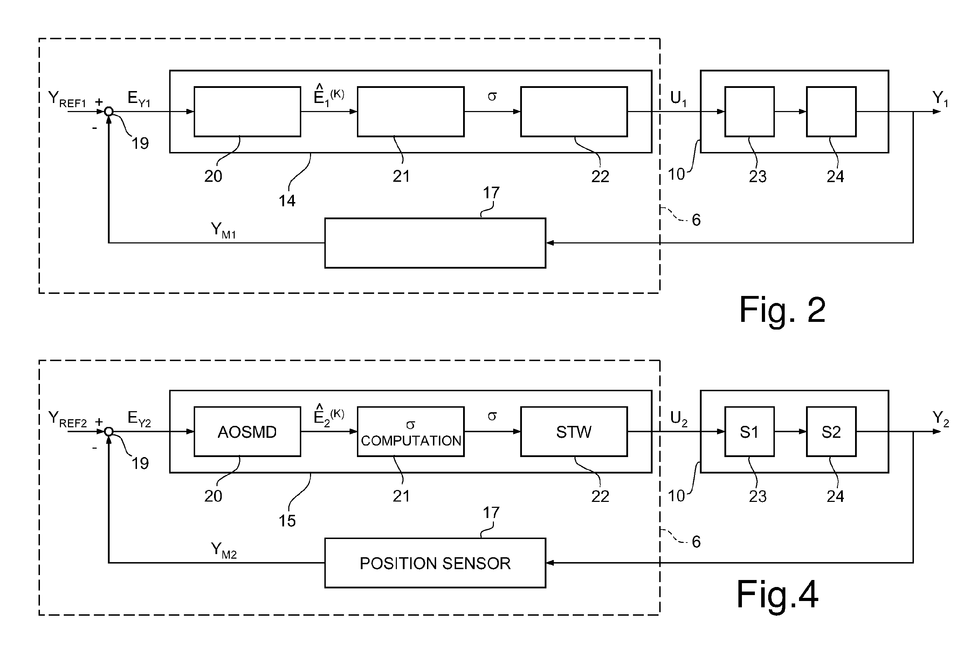

On the basis of detected quantities M, plant regulator 13 generates a first and a second reference signal $Y_{REF1}$, $Y_{REF2}$, respectively for first and second actuating regulator 14, 15. First and second reference signals $Y_{REF1}$, $Y_{REF2}$ are indicative of reference positions that hydraulic actuators 10, 11 must respectively take to arrange feeding valve 7 and IGV stage 8 so as to obtain a fuel flow rate and an air flow rate determined by system regulator 13. Actual positions $Y_1$, $Y_2$ of hydraulic actuators 10, 11 are detected by position sensors 17 that provide respective measured positions $Y_{M1}$, $Y_{M2}$ (figure 2).

Figure 2 shows first actuating regulator 14 and hydraulic actuator 10 to which it is coupled in greater detail.

A subtractor node 19 receives first reference signal $Y_{REF1}$ (adder input) from system regulator 13 and measured position $Y_{M1}$ of hydraulic actuator 10 (subtractor input) from position sensor 17. In particular, measured position $Y_{M1}$ is indicative of actual position $Y_1$ of actuator 10. Therefore, the output of subtractor node 19 provides an error signal $E_{Y1}$ given by:

$$E_{Y1} = Y_{REF1} - Y_{M1} \hspace{3cm} (1)$$

First actuating regulator 14 receives error signal $E_{Y1}$ as an input and determines a control signal $U_1$ on the basis of a control algorithm of the higher order sliding mode type. Herein and hereafter, the expression "higher order" when referred to a sliding mode control will be used to indicate that the sliding mode control is of the second order or of an order higher than two.

More in detail, first actuating regulator 14 comprises an estimating module 20, a computing module 21 and a control module 22, arranged in cascade.

Estimating module 20 includes a differentiator of the "Arbitrary Order Sliding Mode Differentiator" (AOSMD) type and provides an estimation of the time derivatives of error signal $E_{Y1}$ up to an order R (hereinafter, the generic K-order time derivative of error signal $E_{Y1}$ will be indicated by notation $E_{Y1}^{(K)}$). Therefore, estimating module 20 provides computing module 21 with time derivatives $E_{Y1}^{(1)}, ..., E_{Y1}^{(R)}$ of error signal $E_{Y1}$, as well as error signal $E_{Y1}$ itself.

The order R is determined by the structure of computation module 21, which computes a sliding surface σ (having order R) as follows:

$$\sigma = \left(\frac{d}{dt} + p\right)^{R+1} \int E_{Y1} dt = \sum_{K=1}^{R+1} \binom{R+1}{K} p^{R+1-K} E_{Y1}^{(K-1)} + p^{R+1} \int E_{Y1} dt \hspace{1cm} (2)$$

where p is a calibration parameter. In practice, therefore, sliding surface σ is also defined by an integral term, as well as including error signal $E_{Y1}$ and its derivatives $E_{Y1}^{(1)}, ..., E_{Y1}^{(R)}$. The order of sliding surface σ described in equation (2) is equivalent to R.

Sliding surface σ is provided to control module 22, which generates a control signal $U_1$ so as to cancel error signal $E_{Y1}$. More precisely, in the embodiment disclosed herein, control module 22 generates a sliding mode control algorithm of the second order "Supertwisting" type, according to which control signal $U_1$ includes a term proportional to the integral of the sign of sliding surface σ:

$$U = \mathrm{STW}(\sigma) = -\sqrt{F|\sigma|}\,\mathrm{sgn}(\sigma) - WF\int \mathrm{sgn}(\sigma)\mathrm{dt} \qquad (3)$$

where F is a calibration parameter and W is an empirical constant which is strictly higher than 1 (for instance, W = 1.1). Control signal $U_1$ allows to achieve the condition $\sigma = 0$ and, accordingly, to cancel error signal $E_{Y1}$ in a finite time.

In the embodiment disclosed, sliding surface $\sigma$ is of the R order equivalent to 1 and therefore takes the form of

$$\sigma = \frac{\mathrm{dE}_{Y1}}{\mathrm{dt}} + 2pE_{Y1} + p^2\int E_{Y1}\,\mathrm{dt} = E_{Y1}^{(1)} + 2pE_{Y1} + p^2\int E_{Y1}\,\mathrm{dt} \qquad (4)$$

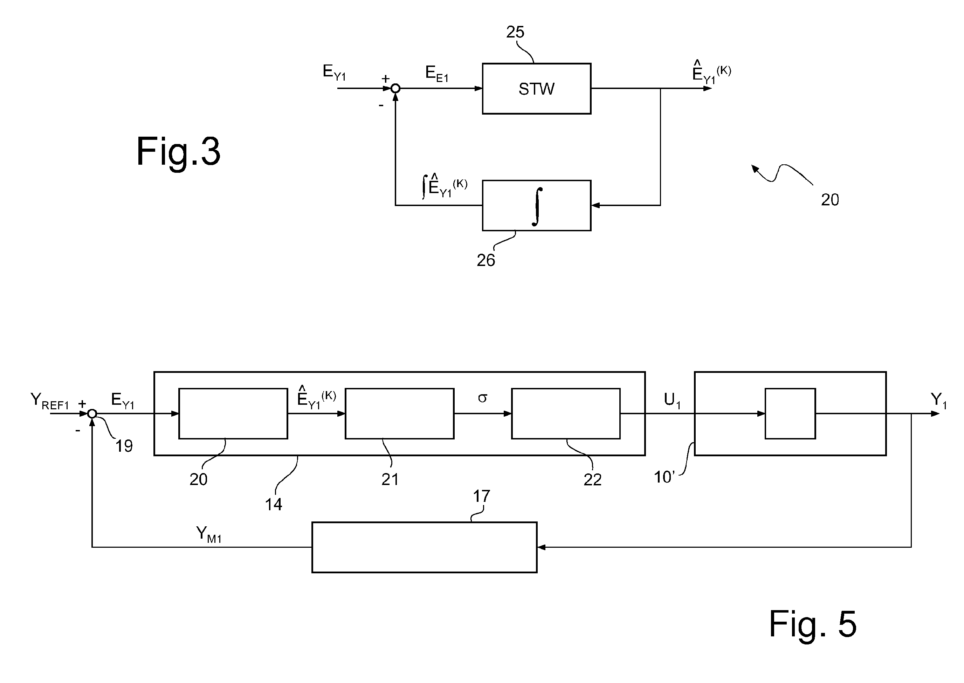

Furthermore, estimating module 20 is configured to determine first derivative $E_{Y1}^{(1)}$ (first order time derivative) of error signal $E_{Y1}$ and takes the form of a Supertwisting differentiator, as shown in figure 3 (the Supertwisting differentiator is a particular example of AOSMD differentiator). In particular, estimating module 20 comprises a Supertwisting control module 25 and a feedback integrator 26. Supertwisting control module 25 determines an estimation $\hat{E}_{Y1}^{(1)}$ of the first derivative of error signal $E_{Y1}$ on the basis of an estimation error $E_{E1}$ that is provided by a subtractor node 28. Estimation error $E_{E1}$ is given by the difference between error signal $E_{Y1}$ and the integral of estimation $\hat{E}_{Y1}^{(1)}$ provided by integrator 26.

$$E_{E1} = E_{Y1} - \int \hat{E}_{Y1}^{(1)}\mathrm{dt} \qquad (5)$$

Estimation $\hat{E}_{Y1}^{(1)}$ has the form of a control law of the sliding mode type that cancels estimation error $E_{E1}$ in a finite time. In practice, estimation $\hat{E}_{Y1}^{(1)}$ is given by:

$$\hat{E}_{Y1}^{(1)} = -\sqrt{A|E_{E1}|}\,\mathrm{sgn}(E_{E1}) - BA\int \mathrm{sgn}(E_{E1}) \qquad (6)$$

(A is a calibration parameter and B is an empirical constant strictly higher than one unit, e.g. B = 1.1) and, on transient expired:

$$\int \hat{E}_{Y1}^{(1)}\mathrm{dt} = E_{Y1} \qquad (7)$$

from which:

$$\hat{E}_{Y1}^{(1)} = E_{Y1}^{(1)} \qquad (8)$$

Therefore, also in this case an integral term is exploited.

With reference again to Figure 2, in the embodiment disclosed herein, control signal $U_1$ is indicative of an actual value to be applied to hydraulic actuator 10 of feeding valve 7.

Hydraulic actuator 10 is of the dual stage type. Specifically, hydraulic actuator 10 comprises a first stage 23, that includes an electromagnet, a first distributing valve and a first hydraulic cylinder (known and not shown), and a second stage 24, that includes a second distributing valve, integral with the plunger of the first hydraulic cylinder, and a second hydraulic cylinder, connected to a movable member of feeding valve 7 (the second distributing valve and the second hydraulic cylinder are also known and not shown). First stage 23 of hydraulic actuator 10 further comprises a conventional regulating loop (not shown), for instance of the hysteresis relay type, which operates so that the current absorbed by the electromagnet is actually equal to the reference value determined by control signal $U_1$. The dynamics of the regulating loop within first stage 23 is very fast and is negligible: in practice, the current provided to the electromagnet may be considered always equal to the value determined by control signal $U_1$.

Furthermore, in the embodiment disclosed herein, second actuating regulator 15 has the same structure as first actuating regulator 14, as briefly shown in Figure 4, where parts differing from those already disclosed only by calibration parameter choice are indicated by the same reference numbers. The control signal generated by control module 22 is in this case indicated by $U_2$, while $E_{Y2}$ is the error signal relating to actuator 11.

The use of a higher order sliding mode control (i.e. of the second order or of an order higher than two; control module 22 is of the Supertwisting type and therefore is of the second order) together with an AOSMD differentiator (estimating module 20, also of the Supertwisting type in the example disclosed) and with a sliding surface σ that includes an integral contribution implies several important advantages.

Firstly, regulator 14 thus made is robust with respect to the relative degree of the controlled system, i.e. of hydraulic actuators 10, 11. The same regulator 14 may also be used for the control of a single stage hydraulic actuator, which has a lower relative degree (figure 5 shows an embodiment of the invention in which regulator 10 is coupled to a single stage hydraulic actuator 10' that actuates feeding valve 7). Therefore, in practice, overestimating the relative degree of the controlled hydraulic actuator does not significantly decrease the performance of regulator 10, in particular as regards stability and immunity to the phenomenon of "chattering", which is common in first order sliding mode regulators. Regulator 10 may therefore be used without the need to proceed to the identification of the relative degree of the controlled system.

Another advantage lies in that the calibration operations are extremely simple. As a matter a fact, the zeroing of error signal $E_{Y1}$ is guaranteed by the zeroing of sliding surface σ if calibration parameter p of equations (2) and (4) is positive. Furthermore, the (regulator and actuator) system is stable if calibration parameter F (equation (3)) is higher than a threshold F'. In practice, during the calibration operations it is sufficient to progressively increase the calibration parameter F up to when the behaviour of the system is satisfactory from the point of view of stability and precision. It is apparent that this calibration procedure requires less time with respect to the elaborate steps of trial-and-error needed to start up an industrial regulator PI with anti wind-up logic. As well as reduced installation times, the regulator thus made has a greater degree of precision and robustness with respect to the known regulators.

The same considerations also apply to the calibration parameter A of Supertwisting estimating module 20 (equation (6)).

Furthermore, estimating module 20 of the AOSMD type reduces the sensibility of regulator 14 to measurement errors.

The same results in terms of robustness may be obtained by actuating regulators based on control modules of the Sub-Optimal or Twisting type with a cascade integrator.

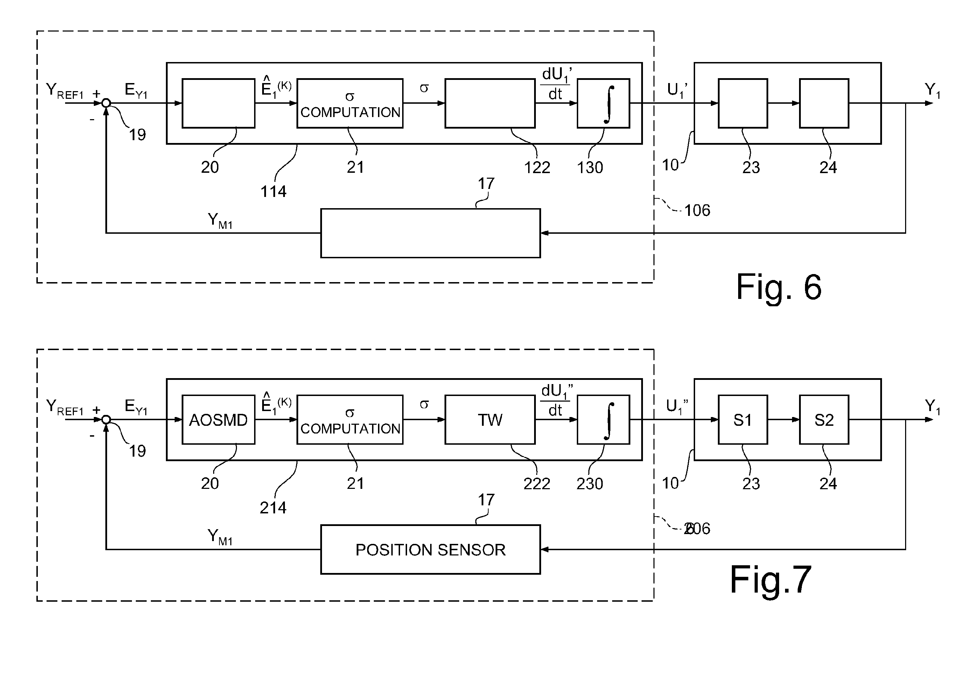

In the embodiment illustrated in Figure 6, where parts that have already been shown are indicated by the same reference numbers, a control device 106 comprises an actuating regulator 114 coupled to feeding valve 7, here a dual stage actuator. Control device 106 further comprises sensors 12, system regulator 13 and an actuating regulator 115 coupled to IGV stage 8, not shown herein for the sake of simplicity. Actuating regulator 115 for IGV stage 8 has the same structure as actuating regulator 114, which will be disclosed hereinafter.

Actuating regulator 114 comprises estimating module 20, computing module 21, which have already been disclosed above, and further includes a control module 122 and a cascade integrator 130. Control module 122 is of the Sub-Optimal type and cooperates with integrator 130 to determine a control signal $U_1$' for actuator 10. In particular, control signal $U_1$' is determined as a function of sliding surface σ on the basis of equation:

$$\frac{dU_1'}{dt} = \text{SUB}(\sigma) = -F\,\text{sgn}\left(\sigma_N - \beta_{PS,N}\right) \quad NT \leq t < (N+1)T \qquad (9)$$

and subsequent time integration.

In equation (9), T indicates the sampling time of actuating regulator 114, N is a time advancement generic index, F is a calibration parameter and β is a constant coefficient in the range between 0.5 and 1 (for instance, β = 0.6). The value of sliding surface σ at a generic sampling time NT is indicated by $\sigma_N$. Furthermore, term $\sigma_{PS,N}$ represents, at generic sampling time NT, the most recent singular point (i.e. a point with null time derivative) of sliding surface σ. Term $\sigma_{PS,N}$ is initialised with the value of sliding surface σ at time t = 0 and is therefore updated as follows:

$$\sigma_{PS,0} = \sigma(0) \qquad \text{(initialisation)}$$

(continued)

$$\sigma_{PS,N} = \sigma N\text{-}1 \quad \text{if } (\sigma_N\text{-}\sigma_{N\text{-}1})\,(\sigma_{N\text{-}1}\,\sigma_{N\text{-}2}) < 0$$
$$\sigma_{PS,N} = \sigma_{PS,N\text{-}1} \quad \text{otherwise}$$

($\sigma_{N\text{-}1}$ and $\sigma_{N\text{-}2}$ indicate the values of sliding surface $\sigma$ respectively at sampling times (N-1)T and (N-2)T).

According to the embodiment shown in Figure 7, a control device 206 comprises an actuating regulator 214 coupled to feeding valve 7, again here a dual stage one. Control device 206 further comprises sensors 12, system regulator 13 and an actuating regulator 215 coupled to IGV stage 8, not shown herein for the sake of simplicity. Actuating regulator 215 for IGV stage 8 has the same structure as actuating regulator 214, which will be disclosed hereinafter.

Actuating regulator 214 comprises estimating module 20, computing module 21, which have already been disclosed above, and further includes a control module 222 and a cascade integrator 230. Control module 222 is of the Twisting type and cooperates with integrator 130 to determine a control signal $U_1''$ for actuator 10. In particular, control signal $U_1''$ is determined as a function of sliding surface $\sigma$ on the basis of equation:

$$\frac{dU_1''}{dt} = TW(\sigma) = -\alpha \, sgn(\sigma_N) - F\,sgn(\sigma_N - \sigma_{N-1}) \quad NT \leq t < (N+1)T \qquad (10)$$

and subsequent time integration, where $\alpha$ is a constant coefficient higher than 1 (for instance, $\alpha = 1.1$) and F is a calibration parameter to be selected as disclosed above.

It is finally apparent that modifications and variations may be made to the disclosed method and device without departing from the scope of the present invention as defined in the appended claims.

In particular, the invention is intended to be advantageously exploited for the regulation of any kind of regulating member for turbines, both gas and steam turbines.

For instance, in a gas turbine the invention may be used for the regulation of a water-fuel emulsion valve.

In a steam turbine, the invention may be applied to the regulation of steam feeding valves.

Furthermore, higher order AOSMD differentiators, in particular of an order higher that two, may be used as, in view of a greater complexity, the estimation of lower order derivatives is more precise.

**Claims**

1. A regulating device for a hydraulic actuator for a regulating member of a turbine, comprising:

   an estimating module (20) for determining an estimation ( $\hat{E}_{Y1}^{(1)}$ ) of at least one derivative ($E_{Y1}^{(1)}$, ..., $E_{Y1}^{(K)}$,..., $E_{Y1}^{(R)}$) of an error signal ($E_{Y1}$), defined by the difference between a reference position signal ($Y_{REF1}$, $Y_{REF2}$) and an actual position signal ($Y_{M1}$, $Y_{M2}$) indicative of an actual position ($Y_1$, $Y_2$) of a hydraulic actuator (10, 11; 10') for a regulating member (7, 8) of a turbine (5);

   a computing module (21) for determining a sliding surface ($\sigma$) on the basis of the estimation ( $\hat{E}_{Y1}^{(1)}$ ) ; and

   a control module (22; 122; 222) of the sliding mode type, couplable to the hydraulic actuator (10, 11; 10') and controlling the actual position (Y) of the hydraulic actuator (10, 11; 10') on the basis of the sliding surface ($\sigma$); **characterised in that** the control module (22; 122; 222) is of higher order sliding mode type, the sliding surface ($\sigma$) includes a term proportional to the integral of the error signal ($E_{Y1}$) and the estimating module (20) comprises a differentiator of the Arbitrary Order Sliding Mode Differentiator type.

2. The device according to claim 1, wherein the estimating module (20) is of the second order.

3. The device according to claim 1 or 2, wherein the estimating module (20) comprises a Supertwisting differentiator.

4. The device according to any of the preceding claims, wherein the computing module (21) is configured to determine the sliding surface ($\sigma$) on the basis of equation:

$$\sigma = \left(\frac{d}{dt} + p\right)^{R+1} \int E_{Y1} dt = \sum_{K=1}^{R+1} \binom{R+1}{K} p^{R+1-K} E_{Y1}^{(K-1)} + p^{R+1} \int E_{Y1} dt$$

where $E_{Y1}$ is the error signal, p is a calibration parameter and R is an order of the sliding surface ($\sigma$).

5. The device according to claim 4, wherein the order (R) of the sliding surface ($\sigma$) is one and the computing module (21) is configured to determine the sliding surface ($\sigma$) on the basis of equation:

$$\sigma = E_{Y1}^{(1)} + 2pE_{Y1} + p^2 \int E_{Y1} dt$$

where $E_{Y1}^{(1)}$ is the first time derivative of the error signal ($E_{Y1}$).

6. The device according to any of the preceding claims, wherein the control module (22; 122; 222) is of the second order.

7. The device according to claim 6, wherein the control module (22) is of the Supertwisting type.

8. The device according to claim 7, wherein the control module (22) is configured to determine a control signal ($U_1$; $U_2$) on the basis of the sliding surface ($\sigma$) according to equation:

$$U = -\sqrt{F|\sigma|}\, sgn(\sigma) - WF \int sgn(\sigma) dt$$

where U is the control signal, F is a calibration parameter and W is an empirical constant.

9. The device according to claim 6, wherein the control module (122) is of the Sub-optimal type.

10. The device according to claim 9, wherein the control module (122) is configured to determine a control signal ($U_1'$) on the basis of the sliding surface ($\sigma$) and of the equation:

$$\frac{dU_1'}{dt} = -F\, sgn(\sigma_N - \beta\sigma_{PS,N}) \quad NT \le t < (N+1)T$$

where $U_1'$ is the control signal, T is a sampling time, N is a time advancement index, $\sigma_N$ is a value of the sliding surface ($\sigma$) at a sampling time NT, $\sigma_{PS,N}$ is a most recent singular point at sampling time NT, F is a calibration parameter and $\beta$ is a constant coefficient.

11. The device according to claim 6, wherein the control module (222) is of the Twisting type.

12. The device according to claim 11, wherein the control module (222) is configured to determine a control signal ($U_1'$) on the basis of the sliding surface ($\sigma$) and of the equation:

$$\frac{dU_2''}{dt} = -\alpha\, sgn(\sigma_N) - F\, sgn(\sigma_N - \sigma_{N-1}) \quad NT \le t < (N+1)T$$

where $U_1''$ is a control signal, T is a sampling time, N and N-1 are time advancement indexes, $\sigma_N$ and $\sigma_{N-1}$ are values of the sliding surface ($\sigma$) at respective sampling times NT and (N-1)T, F is a calibration parameter and $\alpha$ is a constant coefficient.

13. The device according to any of claims 9 to 12, comprising an integrator (130; 230) in cascade with the control module (122; 222)

**14.** A control device of a turbine, comprising:

sensors (12) for detecting quantities (M) relating to a turbine (5);
a system regulating device (13) for providing a reference position signal ($Y_{REF1}$, $Y_{REF2}$) of a hydraulic actuator (10, 11; 10') of a regulating member (7, 8) on the basis of the detected quantities (M); and
a regulating device for a hydraulic actuator for a regulating member of a turbine (14, 15; 114; 115; 214, 215) according to any of the preceding claims.

**15.** A turbine comprising:

a regulating member (7, 8);
a hydraulic actuator (10, 11; 10') for actuating the regulating member (7, 8);
a control device (6; 106; 206) according to claim 9, coupled to the hydraulic actuator (10, 11; 10').

**16.** The turbine according to claim 15, wherein the hydraulic actuator (10, 11) is of the dual stage type.

**17.** The turbine according to claim 15, wherein the hydraulic actuator (10') is of the single stage type.

**18.** A method for regulating a hydraulic actuator of a turbine, comprising:

determining an estimation ($\hat{E}_{Y1}^{(1)}$) of at least one time derivative ($E_{Y1}^{(1)}$, $E_{Y1}^{(K)}$, $E_{Y1}^{(R)}$) of an error signal ($E_{Y1}$), defined by the difference between a reference position signal ($Y_{REF1}$, $Y_{REF2}$) and an effective position signal ($Y_M$) indicative of an effective position (Y) of a hydraulic actuator (10, 11; 10') of a turbine (5);

determining a sliding surface ($\sigma$) on the basis of the estimation ($\hat{E}_{Y1}^{(1)}$); and

controlling the effective position (Y) of the hydraulic actuator (10, 11; 10') on the basis of the sliding surface ($\sigma$) according to a sliding mode control;
**characterised in that** the sliding mode control is of a higher order, the sliding surface ($\sigma$) includes a term

proportional to the integral of the error signal ($E_{Y1}$) and determining the estimation ($\hat{E}_{Y1}^{(1)}$) comprises using a differentiator (20) of the Arbitrary Order Sliding Mode Differentiator type.

**19.** The method according to claim 18, wherein the differentiator (20) is of the second order.

**20.** The method according to claim 18 or 19, wherein the differentiator (20) is a Supertwisting differentiator.

**21.** The method according to any of claims 18 to 20, wherein the sliding surface ($\sigma$) is determined on the basis of equation:

$$\sigma = E_Y^{(1)} + 2pE_Y + p^2 \int E_Y dt$$

where $E_{Y1}^{(1)}$ is the first time derivative of the error signal ($E_{Y1}$).

**22.** The method according to any of claims 18 to 21, wherein the sliding mode control is of the second order.

**23.** The method according to claim 22, wherein the sliding mode control is of the Supertwisting type.

**24.** The method according to claim 23, wherein controlling comprises determining a control signal ($U_1$; $U_2$) on the basis of the sliding surface ($\sigma$) according to equation:

$$U = -\sqrt{F|\sigma|}\,\mathrm{sgn}(\sigma) - WF \int \mathrm{sgn}(\sigma)\,dt$$

where U is the control signal, F is a calibration parameter and W is an empirical constant.

**25.** The method according to claim 22, wherein the sliding mode control is of the Sub-Optimal type.

**26.** The method according to claim 22, wherein the sliding mode control is of the Twisting type.

**27.** The method according to claim 25 or 26, comprising integrating in cascade to the sliding mode control.

Fig.1

Fig. 2

Fig. 4

Fig.3

Fig. 5

Fig. 6

Fig.7

EP 2 067 932 A2